# EUROPÄISCHE PATENTANMELDUNG

(11) **EP 0 549 926 A1**
(43) Veröffentlichungstag der Anmeldung: **07.07.1993**
(21) Anmeldenummer: 92120919.3
(22) Anmeldetag: 08.12.1992
(51) Int. Cl.: H04B 1/38

(54) **Funkgerät mit zusätzlichen Funktionen**

(30) Priorität: 18.12.1991 DE 4141882
(71) Anmelder: SIEMENS AKTIENGESELLSCHAFT, D-80333 München (DE)
(72) Erfinder: Hofmann, Ludwig, W-8905 Mering (DE)

(57) **Zusammenfassung**

Ein Funkgerät, bestehend aus einem Funkteil mit Sender/Empfänger, einer Steuereinrichtung, einem Speicher und einem Tastatur- und Anzeigenfeld, soll so verbessert werden, daß es in vielfältiger Weise genutzt werden kann. Die Erfindung sieht hierzu seinen Aufbau als Personal-Kommunikator vor mit zusätzlich zur Nachrichtenübertragung enthaltenen Funktionen in einem erweiterten Speicherbereich.

## Beschreibung

Die Erfindung bezieht sich auf ein Funkgerät zur Nachrichtenübertragung, bestehend aus einem Funkteil mit Sender/Empfänger, einer Steuereinrichtung, einem Speicher und einem Tastatur- und Anzeigenfeld.

Ein solches Gerät soll gemäß der der Erfindung zugrundeliegenden Aufgabe so verbessert werden, daß es in vielfältiger Weise genutzt werden kann.

Diese Aufgabe wird mit einem Funkgerät der eingangs beschrie benen Art gelöst durch seinen Aufbau als Personal-Kommunikator mit zusätzlich zur Nachrichtenübertragung enthaltenen Funktionen in einem entsprechend erweiterten Speicherbereich.

Vorteilhafte Ausgestaltungen und Weiterbildungen des Erfindungsgegenstandes sind in den Unteransprüchen angegeben.

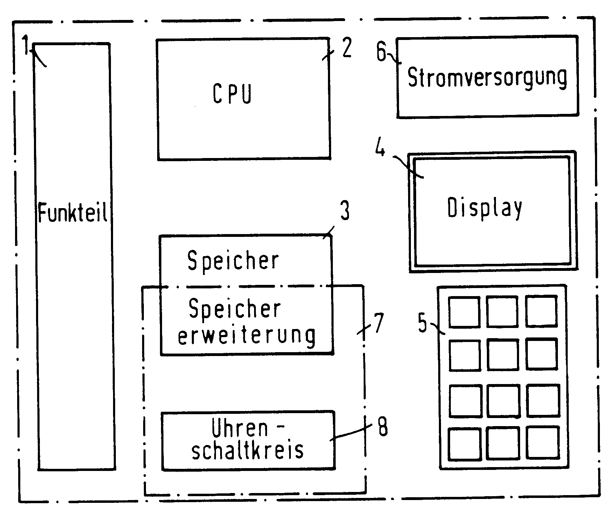

Nachstehend wird die Erfindung anhand eines in der Zeichnung dargestellten Ausführungsbeispiels näher erläutert.

In einem Blockschaltbild ist der prinzipielle Aufbau eines Personal-Kommunikators dargestellt. Die innerhalb eines strichliert umrandeten Feldes eingezeichneten Funktionsgruppen sind ein Funkteil 1, eine Steuereinrichtung (CPU) 2, ein Speicher 3, ein Display 4, eine Tastatur 5 und eine Stromversorgung 6. Ferner ist ein strichpunktiert umrandetes Kästchen 7 vorgesehen, das einen Teil des Speichers 3 miteinschließt. Dieses bedeutet eine Speichererweiterung für zusätzliche Funktionen. Im Kästchen 7 ist ferner eine Funktionseinheit 8 eingezeichnet, die einen Uhrenschaltkreis enthält. Dieser ist für Funktionen mit Zeitanzeige, beispielsweise einen Terminplaner vorgesehen.

Ein solcher erfindungsgemäßer Personal-Kommunikator dient einerseits zur Übertragung von Nachrichten, bestehend aus Sprache und/oder Dateninformationen und beinhaltet andererseits Zusatzfunktionen, die bisher in separaten Geräten realisiert sind. Diese Zusatzfunktionen bestehen beispielsweise in einer Taschenrechnerfunktion, gegebenenfalls mit wissenschaftlichen Funktionen und mit Währungseinheitenumrechnung, einer Notizbuchfunktion mit Datenbank und gegebenenfalls Schutz vor unberechtigtem Zugriff, einem Terminplaner, der mit Alarm- und Weckfunktion sowie automatischem Verbindungsaufbau versehen sein kann, einem Wörterbuch oder Übersetzer für Fremdsprachen, einer Spielefunktion sowie einer Einrichtung zur Positionsbestimmung.

Die Personal-Kommunikatoren sind in der Regel verhältnismäßig kleine Geräte in der Größenordnung eines Handhelds, können jedoch auch als Mobil- oder Traggerät ausgeführt sein, wobei die Produktpalette von einem schnurlosen Telefon über Zellulargeräte bis zum Satellitenterminal reichen kann.

Der Vorteil einer solchen Einrichtung liegt darin, daß die Erweiterung in der Regel allein durch Software realisiert werden kann. Für einige Zusatzfunktionen ist ein Uhrenschaltkreis erforderlich (als Uhrenschaltkreis 8 realisiert), es sei denn, diese Funktion ist bereits im Gerät integriert oder wird von der Kommunikationsinfrastruktur zur Verfügung gestellt.

## Patentansprüche

1. Funkgerät zur Nachrichtenübertragung, bestehend aus einem Funkteil mit Sender/Empfänger, einer Steuereinrichtung, einem Speicher und einem Tastatur- und Anzeigenfeld, **gekennzeichnet** durch seinen Aufbau als Personal-Kommunikator mit zusätzlich zur Nachrichtenübertragung enthaltenen Funktionen in einem erweiterten Speicherbereich.

2. Funkgerät nach Anspruch 1, **dadurch gekennzeichnet,** daß ein Uhrenschaltkreis vorgesehen ist.

3. Funkgerät nach Anspruch 1 oder 2, **gekennzeichnet** durch eine zusätzliche Taschenrechnerfunktion.

4. Funkgerät nach Anspruch 1 oder 2, **gekennzeichnet** durch eine zusätzliche Notizbuchfunktion.

5. Funkgerät nach Anspruch 2, **gekennzeichnet** durch einen zusätzlichen Terminplaner.

6. Funkgerät nach Anspruch 1 oder 2, **gekennzeichnet** durch die Zusatzfunktion Wörterbuch/Übersetzer.

7. Funkgerät nach Anspruch 1 oder 2, **gekennzeichnet** durch eine zusätzliche Spielefunktion.

8. Funkgerät nach Anspruch 1 oder 2, **dadurch gekennzeichnet,** daß eine Zusatzfunktion der Positionsbestimmung dient.

9. Funkgerät nach einem der vorhergehenden Ansprüche, **gekennzeichnet** durch eine interne Stromversorgung.

10. Funkgerät nach Anspruch 9, **gekennzeichnet** durch seine Ausbildung als portables Gerät.
